# EUROPEAN PATENT SPECIFICATION

(11) **EP 4 160 364 B1**
(45) Date of publication and mention of the grant of the patent: **09.07.2025**
(21) Application number: 21813831.1
(22) Date of filing: 26.05.2021
(51) Int. Cl.: G06F 3/023, G06F 3/0484

(54) **METHOD, DEVICE, AND EQUIPMENT FOR SWITCHING TEXT LANGUAGE TYPES, AND STORAGE MEDIUM**
VERFAHREN, VORRICHTUNG UND AUSRÜSTUNG ZUR UMSCHALTUNG VON TEXTSPRACHENTYPEN UND SPEICHERMEDIUM
PROCÉDÉ, DISPOSITIF ET ÉQUIPEMENT PERMETTANT DE COMMUTER DES TYPES DE LANGAGE DE TEXTE, ET SUPPORT DE STOCKAGE

(30) Priority: 28.05.2020 CN 202010471772
(43) Date of publication of application: 05.04.2023
(73) Proprietor: Vivo Mobile Communication Co., Ltd., Dongguan, Guangdong 523863 (CN)
(72) Inventor: ZHENG, Mengjie, Dongguan, Guangdong 523863 (CN)
(74) Representative: Deambrogi, Edgardo
(86) International application number: PCT/CN2021/096190
(87) International publication number: WO 2021/239019

(56) References cited:
- CN-A- 106 782 553
- CN-A- 108 052 212
- CN-A- 109 189 298
- CN-A- 109 240 785
- CN-A- 111 651 068
- US-A1- 2015 187 358
- ED BOTT ET AL: "Special Edition Using Microsoft Word 2000 - Chapter 26: Word 2000 Multilanguage Features", SPECIAL EDITION USING MICROSOFT WORD 2000, XX, XX, 1 May 1999 (1999-05-01), pages 962 - 995, XP002436420

## Description

### TECHNICAL FIELD

The present invention relates to the field of electronic devices, and specifically, to a text language type switching method, a text language type switching apparatus, an electronic device, and a readable storage medium.

### BACKGROUND

With the development of science and technology, working or communicating with electronic devices such as a mobile phone and a computer has become an important part of people's lives. During working or communicating by using the electronic device such as a mobile phone or a computer, text needs to be entered by using an input method.

In a case that a user enters text by using the input method, there is a case that the user is not aware in time that a language type of currently entered text is not expected. Consequently, the user realizes that the language type of the currently entered text is incorrect after a long of text is entered. In this case, the user can only delete a large field of entered text of an unexpected language type, and then edit the text again. Consequently, the user adds a large quantity of unnecessary editing operations, thereby reducing editing experience of the user.

The book by Ed Bott at al. "Special Edition Using Microsoft Word 2000-Chapter26: Word 2000 Multilanguage Features", pages 962-995, discloses steps to manually assign text to a language, first select the text, then choose tools, language, set language. The language dialog box opens. In the Mark Selected Text As scroll box, choose the language you want Word to use, and click OK.

### SUMMARY

This application provides a text language type switching method and apparatus, a device, and a storage medium, which can avoid a large quantity of unnecessary editing operations of a user, thereby improving editing experience of the user.

To resolve the foregoing technical problem, the present invention is implemented as follows:
According to a first aspect, a text language type switching method is provided, which is defined in claim 1.
According to a second aspect, a text language type switching apparatus is provided, which is defined in claim 7.
According to a third aspect, a readable storage medium is provided, which is defined in claim 13.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

The accompanying drawings, which are incorporated in the specification and constitute a part of the specification, illustrate embodiments of this application and are used together with the description thereof to explain the principles of the present invention.
FIG. 1 is a first interface display diagram of an electronic device according to an embodiment of this application;
FIG. 2 is a schematic flowchart of a text language type switching method according to an embodiment of this application;
FIG. 3 is a second interface display diagram of an electronic device according to an embodiment of this application;
FIG. 4 is a third interface display diagram of an electronic device according to an embodiment of this application;
FIG. 5 is a fourth interface display diagram of an electronic device according to an embodiment of this application;
FIG. 6 is a fifth interface display diagram of an electronic device according to an embodiment of this application;
FIG. 7 is a sixth interface display diagram of an electronic device according to an embodiment of this application;
FIG. 8 is a schematic structural diagram of an electronic device according to an embodiment of this application;
FIG. 9 is a schematic diagram of a hardware structure of an electronic device for implementing embodiments of this application; and
FIG. 10 is a schematic diagram of a structure of another electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. According to the embodiments of this application, all other embodiments obtained by a person of ordinary skill in the art without creative efforts fall within the protection scope of this application.

Terms "first" and "second" in the specification and claims of this application are used to distinguish between similar objects, and do not need to be used to describe a specific order or sequence. It should be understood that data used in this way may be interchangeable in appropriate cases, so that the embodiments of this application can be implemented in a sequence other than those shown or described herein. In addition, in the specification and the claims, "and/or" represents at least one of connected objects, and the character "/" generally represents an "or" relationship between associated objects.

A text language type switching method provided in the embodiments of this application is described in detail below with reference to the accompanying drawings by using specific embodiments and application scenarios thereof.

An embodiment of this application provides a text language type switching method, and the method may be executed by various electronic devices, for example, any device that can input text, such as a mobile phone, a tablet computer, a notebook computer, a palmtop computer, an in-vehicle terminal, or a wearable device.

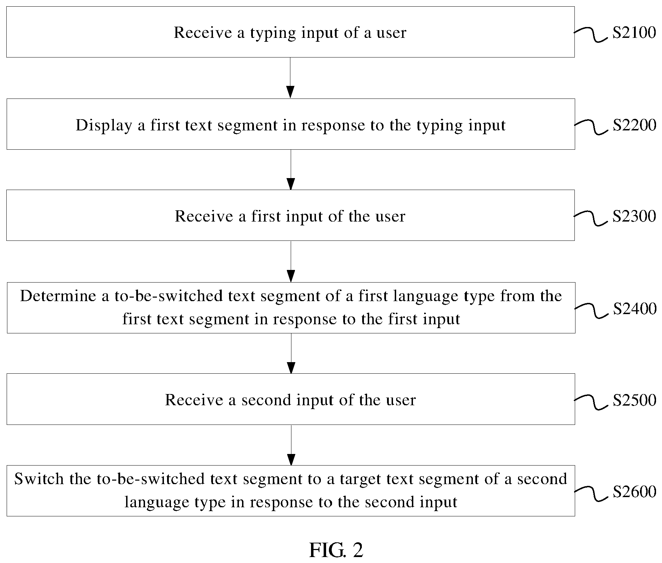

As shown in FIG. 2, the method includes the following S2100 to S2600.

S2100: Receive a typing input of a user.

S2200: Display a first text field in response to the typing input.

In this embodiment of this application, the typing input of the user may be an operation of selecting at least one button on a keyboard of an electronic device in a case that the user edits text. The keyboard may be a push-button keyboard, or may be a touch keyboard.

In this embodiment of this application, the user performs the typing input. After receiving the typing input of the user, the electronic device responds to the typing input to identify the at least one button selected by the user. Further, the electronic device displays a matched text field according to information corresponding to the identified button, that is, a first text field in this embodiment of this application.

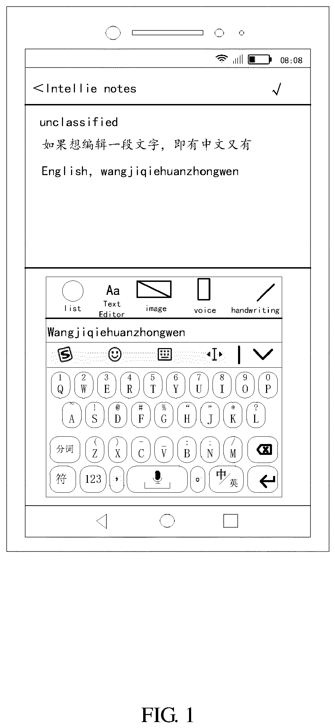

For example, text to be edited by the user by using an input method is " 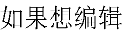 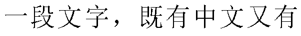 English, 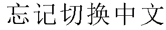 ". After "English" is input, the user forgets to switch a language type from English to Chinese. Consequently, as shown in FIG. 1, a piece of text that is actually edited by using the input method is " 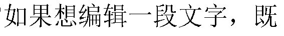 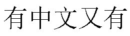 English,wangjiqiehuanzhongwen". In the example shown in FIG. 1, the first text field is " 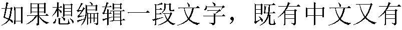 English,wangjiqiehuanzhongwen".

S2300: Receive a first input of the user.

In this embodiment of this application, the first input of the user is an operation that the user selects an input text field of an unexpected language type from the first text field. In this embodiment of this application, the input text field of the unexpected language type is referred to as a to-be-switched text field.

With reference to the example described in FIG. 1, the to-be-switched text field is "wangjiqiehuanzhongwen" input by the user because the user forgets to switch a language type.

S2400: Determine a to-be-switched text field of a first language type from the first text field in response to the first input.

In this embodiment of this application, the first language type is the unexpected language type of the user.

In an embodiment, the electronic device may separately display a cursor "|" on each side of the determined to-be-switched text field, to prompt the user of a specific location of the to-be-switched text field.

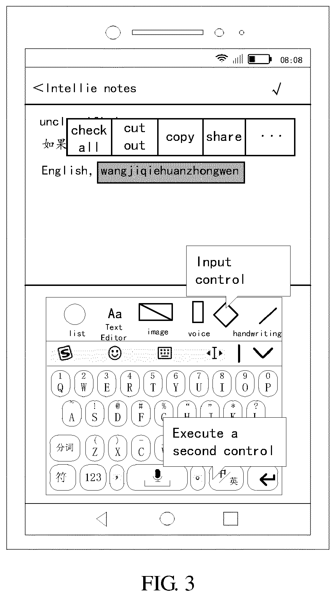

Alternatively, as shown in FIG. 3, a rectangular frame with a grayscale is displayed on above the determined to-be-switched text field, and waterdrop cursors are displayed on both sides, to prompt the user of a specific location of the to-be-switched text field.

In this embodiment of this application, the first text field includes at least two sub-text fields that are sequentially input by the user. It may be understood that the to-be-switched text field is a sub-text field in the first text field. One sub-text field is a text field that is consecutively input by the user at one time.

For example, if an input of the user is the first text field " 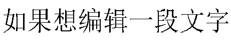 , 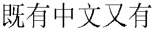 English,wangjiqiehuanzhongwen", after entering "ruguoxiang", the user taps the Enter key or the Space key or taps 1, and "ruguoxiang" is displayed as " 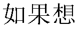 ". Further, after entering "bianjiyiduan", the user taps 2, and "bianjiyiduan" is displayed as " 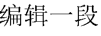 ". Further, after entering "wenzi", the user taps the Enter key or the Space key or taps 1, and " wenzi " is displayed as " 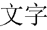 ". Further, after entering "jiyou", the user taps the Enter key or the Space key or taps 1, and "jiyou" is displayed as " 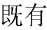 ". Further, after entering "zhongwen", the user taps the Enter key or the Space key or taps 1, and "zhongwen" is displays as " 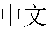 ". Further, after entering "youyou", the user taps the Enter key or the Space key or taps 1, and "youyou" is displayed as " 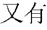 ", and then taps a conversion key "shift" to convert Chinese into English. Further, after entering "english", the user taps the Enter key or the Space key, and "English" is displayed as "English", and then the user enters a comma. The user forgets to tap "shift" to convert Chinese into English, and in this case, the user enters "wangjiqiehuanzhongwen". In this case, sub-text fields that are sequentially input by the user may be obtained: " 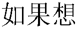 ", " 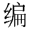 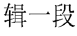 ", " 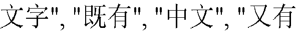 ", "English", and "wangjiqiehuanzhongwen".

In an embodiment of this application, a specific implementation of S2400 may be implemented as the following S2410:

S2410: According to a target type of the first input, determine a target sequence number corresponding to the target type and determine a sub-text field corresponding to the target sequence number that is in the at least two sub-text fields as the to-be-switched text field.

In an embodiment of this application, the target type of the first input may be a quantity of input times of the first input. Correspondingly, the target sequence number corresponding to the target type is a specific quantity of input times of the first input.

In another embodiment of this application, the target type of the first input may alternatively be a sliding distance, a sliding direction, a sliding speed, or the like corresponding to the first input. Correspondingly, the target sequence number corresponding to the target type may be specifically a specific sliding distance value, a specific sliding direction, a specific sliding speed, or the like corresponding to the first input. It may be understood that a corresponding target sequence number is also different in a case that a specific sliding distance value, a specific sliding direction, or a specific sliding speed is different.

For example, in a case that the target type of the first input is the sliding distance of the first input, for example, if the sliding distance is a sliding distance less than 0.5 cm, it is determined that the target sequence number is 1. If the sliding distance is between 0.5 cm and 1 cm, it is determined that the target sequence number is 2.

In this embodiment of this application, different target sequences correspond to different sub-text fields in the first text field.

In an embodiment of this application, a sub-text field whose reverse sequence number is the same as the target sequence number in the first text field may be used as the sub-text field corresponding to the target sequence number.

Alternatively, a sub-text field whose sequence number is the same as the target sequence number in the first text field may be used as the sub-text field corresponding to the target sequence number. In this embodiment, the first text field may be a preset quantity of latest sub-text fields that are sequentially input by the user.

It may be learned from the foregoing content that the text language type switching method provided in this embodiment of this application further includes a step of determining a sub-text field, and the step is the following S2411:
S2411: In a case that an input event of an acknowledgment character is monitored, determine, as one sub-text field, a character between a currently latest input text and a character that is input for the first time after the input event is previously monitored.

In this embodiment of this application, the input event of the acknowledgement text may be an event such as an event of tapping the Space key, an event of tapping the Enter key, or an event of tapping the number key 1, 2, 3, 4, or 5.

Based on S2410, in a case that the electronic device is an electronic device according to a touch keyboard, in the text language type switching method provided in this embodiment of this application, an input control used by the user to input the first input may be further provided. The user may tap the input control at least once to implement execution of the first input. Alternatively, a sliding operation may be performed on the input control to implement execution of the first input.

In an embodiment of this application, the input control may be a newly added control disposed within a range of a touch keyboard corresponding to an input method. For example, the input control may be shown in FIG. 3.

In a case that the electronic device is an electronic device according to a push-button keyboard, in the text language type switching method provided in this embodiment of this application, a combined shortcut key and a key for selecting a to-be-switched text field may be further provided for the user to enter the first input.

In this embodiment, the electronic device identifies a pressing operation for the combined shortcut key as the first input in the first time, , and after identifying the first input in the first time, the electronic device identifies a pressing operation on the key for selecting the to-be-switched text field as the first input in the second time or more.

In this embodiment of this application, the combined shortcut key may be set by the user in Settings in a soft keyboard of the electronic device, and the key for selecting the to-be-switched text field may be a key with a left arrow.

S2500: Receive a second input of the user.

In this embodiment of this application, the second input is used to instruct to switch the to-be-switched text field to a target text field of a second language type. The second language type is an expected language type of the user.

In an example, the second input of the user may be an operation of tapping the "shift" key by the user.

In another example, in a case that the first language type is Chinese and the second language type is English, as shown in FIG. 3, the second input of the user may be an operation of tapping the "Chinese or English" key by the user.

S2600: Switch the to-be-switched text field to a target text field of a second language type in response to the second input.

It may be understood that the to-be-switched text field of the first language type and the target text field of the second language type correspond to a same typing input of the user. In other words, the to-be-switched text field is the same as an original text field of the target text field. Therefore, the electronic device may obtain, according to the original text field of the to-be-switched text field, the target text field corresponding to the to-be-switched text field.

Based on the foregoing content, in an embodiment, the foregoing S2200 further includes the following step S2210:
S2210: According to the first typing sub-input, determine an original text field and determine the to-be-switched text field of the first language type corresponding to the original text field.

In implementation of this application, the first typing input includes multiple typing sub-inputs. Each typing sub-input corresponds to one original text field, and one original text field corresponds to one sub-text field in the first text field. A typing sub-input corresponding to the to-be-switched text field is recorded as the first sub-input. The original text field in S2210 is an original text field corresponding to the first sub-input.

In implementation of this application, the electronic device may record an original text field corresponding to a preset quantity of typing sub-inputs that are executed by the user.

Based on S2210, a specific implementation of S2600 may be S2610.

S2610: Determine, according to the original text field corresponding to the to-be-switched text field, a target text field of the second language type corresponding to the original text field.

For example, in a case that the first language type is English, the to-be-switched text field is an original text field, and in a case that the second language type is English, the target text field is an original text field.

In this embodiment of this application, in a case that the original text field is consistent with text composition of the second language type, a specific implementation of S2610 may be: using, as the target text field of the second language type, the original text field corresponding to the to-be-switched text field.

For example, if the first language type is Chinese, the original text field corresponding to the to-be-switched text field of the first language type is "abcdef", and the second language type is English, "abcdef" is an English text field expected to be input by the user, that is, the target text field of the second language type. In this case, the original text field corresponding to the to-be-switched text field is a text field of the second language type expected by the user. Therefore, the original text field corresponding to the to-be-switched text field is directly used as the target text field of the second language type.

In this embodiment of this application, in a case that the original text field corresponds to a text field of at least one second language type, a specific implementation of S2610 may be the following S2611 to S2613:
S2611: Display the text field of at least one second language type that matches the original text field corresponding to the to-be-switched text field.
S2612: Receive a third input of the user.

In this embodiment of this application, the third input of the user is an operation of selecting the target text field of the second language type from the text field of at least one second language type by the user.

S2613: Determine the target text field of the second language type from the text field of at least one second language type in response to the third input.

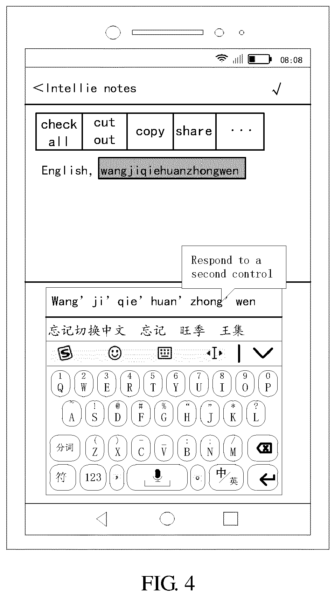

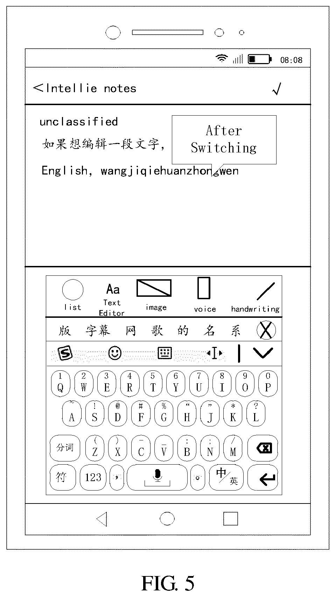

In an example, if the first language type is English, and the corresponding to-be-switched text field is "wdjx", the original text field of the to-be-switched text field is "wdjx". In a case that the second language type is Chinese, the original text field "wdjx" of the to-be-switched text field corresponding to a text field of at least one second language type may be " 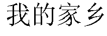 ", " 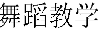 ", or the like. The user may execute the third input, to select the target text field of the second language type from the text field of at least one second language type. The electronic device determines the target text field of the second language type from the text field of at least one second language type. in response to the third input
In addition, with reference to the example shown in FIG. 1, after the electronic device performs S2600, as shown in FIG. 4, the to-be-switched text field "wangjiqiehuanzhongwen" of the first type may be displayed, and a corresponding target text field of the second language type is " 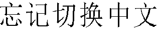 ". Further, the electronic device may directly replace "wangjiqiehuanzhongwen" in the first text field with " 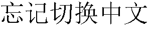 ", and an effect is shown in FIG. 5.

Based on any one of the foregoing embodiments, after switching the to-be-switched text field to the target text field of the second language type, the electronic device may further switch the cursor to the end of the displayed text field, to prevent the user from manually switching the cursor to the end of the displayed text field. Based on this, the foregoing S2600 may be shown in the following S2620:
S2620: Switch the to-be-switched text field to a target text field of the second language type, and switch a cursor to an end of a displayed text field in response to the second input.

In this embodiment of this application, after switching the to-be-switched text field to the target text field of the second language type, the electronic device controls the cursor to automatically switch to the end of the displayed text field. In this case, a text input location is at the end of the displayed text field. In this way, the user can continue to perform typing input without manually moving the cursor to the end of the displayed text field. This further improves editing experience of the user.

The displayed text field is a text field formed after the to-be-switched text field in the first text field is switched to the target text field.

Certainly, in this embodiment of this application, the cursor may be switched to the end of the displayed text field in another manner.

For example, according to the foregoing example of the combined shortcut key, after the electronic device switches the to-be-switched text field to the target text field of the second language type, if the user triggers the combined shortcut key again, the electronic device controls the cursor to switch to the end of the displayed text field.

For example, according to the foregoing example of the input control, after the electronic device switches the to-be-switched text field to the target text field of the second language type, if the user taps the input control again, the electronic device controls the cursor to switch to the end of the displayed text field.

Based on any one of the foregoing embodiments, the text language type switching method provided in this embodiment of this application further includes: controlling the electronic device to switch the first language type to the second language type. In this embodiment, before the user performs the typing input again, a language type does not need to be manually switched. This further improves editing experience of the user.

In this embodiment of this application, a typing input of a user is received, and a first text field is displayed in response to the typing input; a first input of the user is received; a to-be-switched text field of a first language type is determined from the first text field in response to the first input; a second input of the user is received; and the to-be-switched text field is switched to a target text field of a second language type in response to the second input. In this way, only the first input needs to be performed by the user, so that the to-be-switched text field of the first language type may be selected, and then one second input is performed, so that the to-be-switched text field of the first language type may be switched to the target text field of the second language type. In this way, an editing operation performed again by the user is avoided, that is, a large quantity of unnecessary editing operations performed by the user are avoided, thereby improving editing experience of the user.

Based on the foregoing embodiment, in the text language type switching method provided in this embodiment of this application, text may also be edited again. Specifically, in a case that the user is dissatisfied with some sub-text fields in the first text field, the dissatisfied text field may be considered as he to-be-switched text field and is determined by using the foregoing S2400. Then, the user can edit the text again. Finally, the electronic device replaces the text field that is not satisfied by the user with a re-edited text field. Based on this, the text language type switching method provided in this embodiment of this application may further include the following steps:
S2710: Recei he user.

In this embodiment of this application, the fourth input is the same as the first input, and details are not described herein again.

S2720: Determine a to-be-edited text field in the first text field in response to the fourth input.

S2730: Determine a text field re-edited by the user, and replace the to-be-edited text field with the re-edited text field.

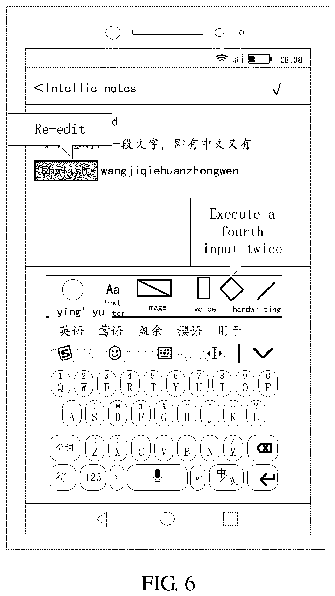

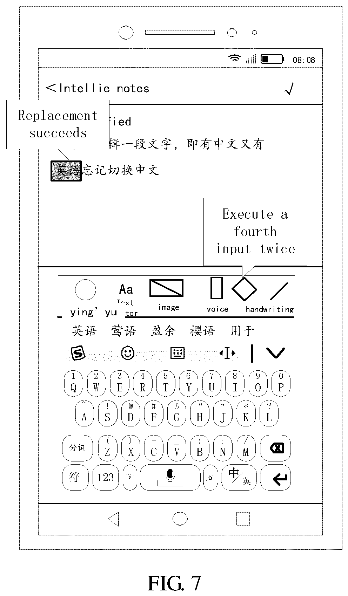

For example, as shown in FIG. 6, in a case that the first text field is " 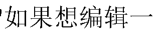 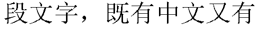 English, 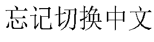 ", if the user is not satisfied with the last second input sub-text field "English ", the user may execute the fourth input twice. The electronic device determines "English" in the first text field as a to-be-edited text field in response to the fourth input. The user re-edits the text field "English". In this case, as shown in FIG. 7, the electronic device replaces "English" with " 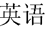 ".

Based on any one of the foregoing embodiments, after replacing the to-be-edited text field with the re-edited text field, the electronic device may further switch the cursor to the end of the displayed text field, to prevent the user from manually switching the cursor to the end of the displayed text field. Based on this, the foregoing S2730 may be shown in the following S2731:
S2731: Determine a text field re-edited by the user, replace a to-be-edited text field with the re-edited text field, and switch the cursor to the end of the displayed text field.

In this embodiment of this application, after replacing the to-be-edited text field with the re-edited text field, the electronic device controls the cursor to automatically switch to the end of the displayed text field. In this case, a text input location is at the end of the displayed text field. In this way, the user can continue to perform typing input without manually moving the cursor to the end of the displayed text field. This further improves editing experience of the user.

The displayed text field is a text field formed after the to-be-switched text field in the first text field is switched to re-edited text.

Certainly, in this embodiment of this application, the cursor may be switched to the end of the displayed text field in another manner.

For example, according to the foregoing example of the combined shortcut key, after the electronic device replaces the to-be-edited text field with the re-edited text field, if the user triggers the combined shortcut key again, the electronic device controls the cursor to switch to the end of the displayed text field.

For example, according to the foregoing example of the input control, after the electronic device replaces the to-be-edited text field with the re-edited text field, if the user taps the input control again, the electronic device controls the cursor to switch to the end of the displayed text field.

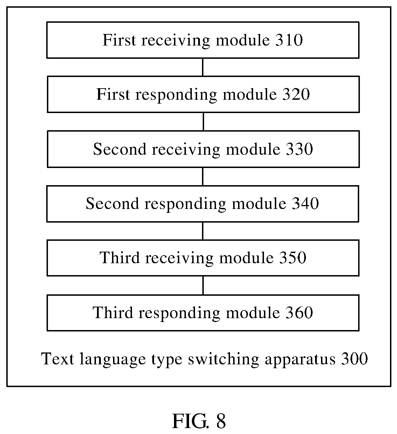

An embodiment of this application provides a text language type switching apparatus 300. As shown in FIG. 8, the apparatus 300 includes a first receiving module 310, a first responding module 320, a second receiving module 330, a second responding module 340, a third receiving module 350, and a third responding module 360.

The first receiving module 310 is configured to receive a typing input of a user.

The first responding module 320 is configured to display a first text field in response to the typing input.

The second receiving module 330 is configured to receive a first input of the user.

The second responding module 340 is configured to determine a to-be-switched text field of a first language type from the first text field in response to the first input.

The third receiving module 350 is configured to receive a second input of the user.

The third responding module 360 is configured to switch the to-be-switched text field to a target text field of a second language type in response to the second input.

In an embodiment, the typing input includes a first typing sub-input.

The first responding module 320 is specifically configured to: according to the first typing sub-input, determine an original text field and determine the to-be-switched text field of the first language type corresponding to the original text field.

The third responding module 360 is specifically configured to determine, according to the original text field corresponding to the to-be-switched text field, a target text field of the second language type corresponding to the original text field.

In an embodiment, in a case that the first language type is English, the to-be-switched text field is the original text field; and
in a case that the second language type is English, the target text field is the original text field.

In an embodiment, in a case that the original text field corresponds to a text field of at least one second language type, the third responding module 360 includes a display unit, a receiving unit, and a responding unit.

The display unit is configured to display the text field of at least one second language type that matches the original text field corresponding to the to-be-switched text field.

The receiving unit is configured to receive third input of the user.

The responding unit is configured to determine the target text field of the second language type from the text field of at least one second language type in response to the third input.

In an embodiment, the first text field includes at least two sub-text fields that are sequentially input by the user, and the second responding module 340 is specifically configured to:
according to a target type of the first input, determine a target sequence number corresponding to the target type and determine a sub-text field corresponding to the target sequence number that is in the at least two sub-text fields as the to-be-switched text field.

In an embodiment, the apparatus 300 further includes a determining module, configured to:
in a case that an input event of an acknowledgment character is monitored, determine, as one sub-text field, a character between a currently latest input character and a character that is input for the first time after the input event is previously monitored.

In an embodiment, the third responding module is specifically configured to:
switch the to-be-switched text field to the target text field of the second language type, and switch a cursor to an end of a displayed text field in response to the second input.

The text language type switching apparatus 300 provided in this embodiment of this application can implement processes implemented by the electronic device in the method embodiment of FIG. 2. To avoid repetition, details are not described herein again.

In this embodiment of this application, the first receiving module receives a typing input of a user, and the first responding module displays a first text field in response to the typing input; the second receiving module receives a first input of the user; the second responding module determines a to-be-switched text field of a first language type from the first text field in response to the first input; the third receiving module receives a second input of the user; and the third responding module switches the to-be-switched text field to a target text field of a second language type in response to the second input. In this way, only the first input needs to be performed by the user, so that the to-be-switched text field of the first language type may be selected, and then one second input is performed, so that the to-be-switched text field of the first language type may be switched to the target text field of the second language type. In this way, an editing operation performed again by the user is avoided, that is, a large quantity of unnecessary editing operations performed by the user are avoided, thereby improving editing experience of the user.

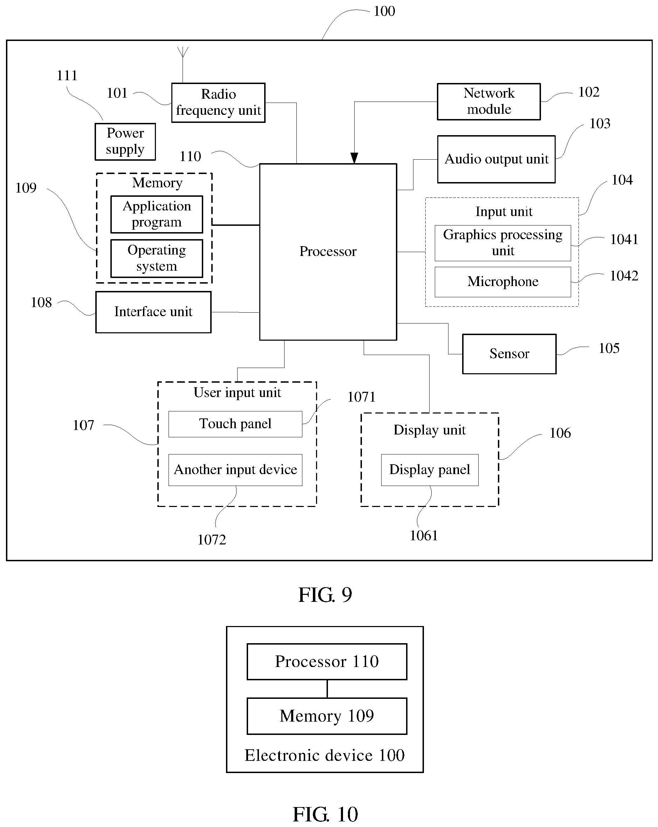

FIG. 9 is a schematic diagram of a hardware structure of an electronic device for implementing the embodiments of the present invention. The electronic device 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that a structure of the electronic device shown in FIG. 1 does not constitute a limitation on the electronic device, and the electronic device may include more or fewer components than those shown in the figure, or combine some components, or have different component arrangements. In this embodiment of the present invention, the electronic device includes but is not limited to a mobile phone, a tablet computer, a laptop computer, a palmtop computer, an in-vehicle terminal, a wearable device, and the like.

The user input unit 107 is configured to receive a typing input of a user.

The display unit 106 is configured to display a first text field in response to the typing input.

The user input unit 107 is further configured to receive a first input of the user.

The processor 110 is configured to determine a to-be-switched text field of a first language type from the first text field in response to the first input.

The user input unit 107 is further configured to receive a second input of the user.

The processor 110 is further configured to switch the to-be-switched text field to a target text field of a second language type in response to the second input.

In this embodiment of this application, the user input unit receives a typing input of a user; the display unit displays a first text field in response to the typing input; the user input unit receives a first input of the user; the processor determines a to-be-switched text field of a first language type from the first text field in response to the first input; the user input unit receives a second input of the user; and the processor switches the to-be-switched text field to a target text field of a second language type in response to the second input. In this way, only the first input needs to be performed by the user, so that the to-be-switched text field of the first language type may be selected, and then one second input is performed, so that the to-be-switched text field of the first language type may be switched to the target text field of the second language type. In this way, an editing operation performed again by the user is avoided, that is, a large quantity of unnecessary editing operations performed by the user are avoided, thereby improving editing experience of the user.

It should be understood that, in this embodiment of the present invention, the radio frequency unit 101 may be configured to receive and send information or receive and send a signal in a call process. Specifically, after downlink data from a base station is received, the processor 110 processes the downlink data. In addition, uplink data is sent to the base station. Generally, the radio frequency unit 101 includes but is not limited to an antenna, at least one amplifier, a transceiver, a coupler, a low noise amplifier, a duplexer, and the like. In addition, the radio frequency unit 101 may further communicate with a network and another device by using a wireless communication system.

The electronic device provides wireless broadband Internet access for the user by using the network module 102, for example, helping the user send and receive an email, browse a web page, and access streaming media.

The audio output unit 103 may convert audio data received by the radio frequency unit 101 or the network module 102 or stored in the memory 109 into an audio signal and output as sound. In addition, the audio output unit 103 may further provide audio output (for example, call signal receiving sound or message receiving sound) related to a specific function performed by the electronic device 100. The audio output unit 103 includes a speaker, a buzzer, a telephone receiver, and the like.

The input unit 104 is configured to receive an audio or video signal. The input unit 104 may include a graphics processing unit (Graphics Processing Unit, GPU) 1041 and a microphone 1042. The graphics processing unit 1041 processes image data of a static picture or a video obtained by an image capture apparatus (such as a camera) in a video capture mode or an image capture mode. The processed image frame may be displayed on the display unit 106. The image frame processed by the graphics processing unit 1041 may be stored in the memory 109 (or another storage medium) or sent by using the radio frequency unit 101 or the network module 102. The microphone 1042 may receive sound and can process such sound into audio data. The processed audio data may be output by being converted into a format that may be sent to a mobile communications base station by using the radio frequency unit 101 in a telephone call mode.

The electronic device 100 further includes at least one sensor 105, such as an optical sensor, a motion sensor, and another sensor. Specifically, the optical sensor includes an ambient light sensor and a proximity sensor. The ambient light sensor may adjust luminance of a display panel 1061 according to brightness of ambient light, and the proximity sensor may disable the display panel 1061 and/or backlight in a case that the electronic device 100 approaches an ear. As a type of the motion sensor, an accelerometer sensor may detect magnitude of an acceleration in each direction (generally three axes), and may detect magnitude and a direction of gravity in a case of being static. The accelerometer sensor may be used for recognizing an electronic device gesture (for example, horizontal and vertical screen switching, a related game, or magnetometer posture calibration), a function related to vibration recognition (for example, a pedometer or a strike), or the like. The sensor 105 may further include a fingerprint sensor, a pressure sensor, an iris sensor, a molecular sensor, a gyroscope, a barometer, a hygrometer, a thermometer, an infrared sensor, and the like. This is not described herein.

The display unit 106 is configured to display information input by the user or information provided for the user. The display unit 106 may include a display panel 1061, and the display panel 1061 may be configured in a form of a liquid crystal display (Liquid Crystal Display, LCD), an organic light-emitting diode (Organic Light-Emitting Diode, OLED), or the like.

The user input unit 107 may be configured to receive input digit or character information and generate key signal input related to user setting and function control of the electronic device. Specifically, the user input unit 107 includes a touch panel 1071 and another input device 1072. The touch panel 1071, also referred to as a touchscreen, may collect a touch operation performed by the user on or near the touch panel 1071 (for example, an operation performed by the user on or near the touch panel 1071 by using any suitable object or accessory such as a finger or a stylus). The touch panel 1071 may include two parts: a touch detection apparatus and a touch controller. The touch detection apparatus detects a touch location of the user, detects a signal brought by the touch operation, and transmits the signal to the touch controller. The touch controller receives touch information from the touch detection apparatus, converts the touch information into contact coordinates, sends the contact coordinates to the processor 110, and can receive and execute a command sent by the processor 110. In addition, the touch panel 1071 may be implemented by using multiple types such as a resistive type, a capacitive type, an infrared ray, and a surface acoustic wave. The user input unit 107 may include another input device 1072 in addition to the touch panel 1071. Specifically, the another input device 1072 may include but is not limited to one or more of a physical keyboard, a function key (such as a volume control key or an on/off key), a trackball, a mouse, a joystick, and the like. Details are not described herein.

Further, the touch panel 1071 may cover the display panel 1061. After detecting the touch operation on or near the touch panel 1071, the touch panel 1061 transmits the touch operation to the processor 110 to determine a type of a touch event, and then the processor 110 provides corresponding visual output on the display panel 1061 according to the type of the touch event. In FIG. 9, the touch panel 1071 and the display panel 1061 are used as two independent components to implement input and output functions of the electronic device. However, in some embodiments, the touch panel 1071 and the display panel 1061 may be integrated to implement the input and output functions of the electronic device. This is not specifically limited herein.

The interface unit 108 is an interface connecting an external apparatus to the electronic device 100. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 108 may be configured to receive input (for example, data information and power) from the external apparatus and transmit the received input to one or more elements in the electronic device 100, or may be configured to transmit data between the electronic device 100 and the external apparatus.

The memory 109 may be configured to store a software program and various data. The memory 109 may mainly include a program storage area and a data storage area. The program storage area may store an operating system, an application program required by at least one function (such as a sound play function or an image play function), and the like. The data storage area may store data (such as audio data or an address book) or the like created according to use of the mobile phone. In addition, the memory 109 may include a high-speed random access memory, and may further include a non-volatile memory such as at least one magnetic disk storage component, a flash memory component, or another volatile solid-state storage component.

The processor 110 is a control center of the electronic device, and is connected to all parts of the entire electronic device by using various interfaces and lines, and performs various functions of the electronic device and processes data by running or executing the software program and/or the module that are stored in the memory 109 and invoking the data stored in the memory 109, to implement overall monitoring on the electronic device. The processor 110 may include one or more processing units. Preferentially, the processor 110 may be integrated with an application processor and a modem processor. The application processor mainly processes an operating system, a user interface, an application program, and the like, and the modem processor mainly processes wireless communication. It may be understood that the modem processor may also not be integrated into the processor 110.

The electronic device 100 may further include a power supply 111 (such as a battery) that supplies power to each component. Preferably, the power supply 111 may be logically connected to the processor 110 by using a power management system, to implement functions such as charging, discharging, and power consumption management by using the power management system.

In addition, the electronic device 100 includes some function modules not shown, and details are not described herein.

Preferably, an embodiment of this application further provides an electronic device 100, including, as shown in FIG. 10, a processor 110, a memory 109, and a program or an instruction that is stored in the memory 109 and that can run on the processor 110. In a case that the program or the instruction is executed by the processor 110, processes of the embodiment of the text language type switching method can be implemented, and a same technical effect can be achieved. To avoid repetition, details are not described herein.

An embodiment of this application further provides a computer-readable storage medium. A computer program is stored in the computer-readable storage medium. In a case that the computer program is executed by a processor, processes of the embodiment of the text language type switching method can be implemented, and a same technical effect can be achieved. To avoid repetition, details are not described herein. The computer-readable storage medium includes a read-only memory (Read-Only Memory, ROM for short), a random access memory (Random Access Memory, RAM for short), a magnetic disk, an optical disc, or the like.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. According to such an understanding, the technical solutions of the present invention essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present invention.

The embodiments of the present invention are described with reference to the accompanying drawings. However, the present invention is not limited to the foregoing specific implementations. The foregoing specific implementations are merely examples, but are not limiting. A person of ordinary skill in the art may make many forms without departing from the objective and the scope of the claims of the present invention, and these forms all fall within the protection scope of the present invention.

## Claims

1. A text language type switching method for controlling an electronic device (100) comprising a touchscreen (1071), wherein the method comprises:
receiving (S2100), by the touchscreen (1071), a typing input of a user;
displaying (S2200), by the touchscreen (1071), a first text field in response to the typing input;
receiving (S2300), by the touchscreen (1071), a first input of the user;
determining (S2400) a to-be-switched text field of a first language type from the first text field in response to the first input;
receiving (S2500) a second input of the user; and
switching (S2600) the to-be-switched text field to a target text field of a second language type in response to the second input;
wherein
the first text field comprises at least two sub-text fields that are sequentially input by the user, and the determining (S2400) the to-be-switched text field of the first language type from the first text field in response to the first input specifically comprises:
according to a target type of the first input, determining a target sequence number corresponding to the target type and determining a sub-text field corresponding to the target sequence number that is in the at least two sub-text fields as the to-be-switched text field; wherein
the target type of the first input is any one of following: a quantity of input times of the first input, a sliding distance, a sliding direction or a sliding speed corresponding to the first input.

2. The method according to claim 1, wherein the typing input comprises a first typing sub-input, the first typing input comprises multiple typing sub-inputs, the first typing sub-input is one of the multiple typing sub-inputs, and the displaying (S2200) the first text field in response to the typing input comprises:
according to the first typing sub-input, determining an original text field and determining the to-be-switched text field of the first language type corresponding to the original text field; and
the switching (S2600) the to-be-switched text field to the target text field of the second language type comprises:
determining, according to the original text field corresponding to the to-be-switched text field, the target text field of the second language type corresponding to the original text field.

3. The method according to claim 2, wherein
in a case that the first language type is English, the to-be-switched text field is the original text field; or
in a case that the second language type is English, the target text field is the original text field.

4. The method according to claim 2, wherein in a case that the original text field matches a text field of at least one second language type, the determining, according to the original text field corresponding to the to-be-switched text field, the target text field of the second language type corresponding to the original text field comprises:
displaying the text field of at least one second language type that matches the original text field corresponding to the to-be-switched text field;
receiving a third input of the user; and
determining the target text field of the second language type from the text field of at least one second language type in response to the third input.

5. The method according to claim 1, wherein the method further comprises a step of determining the sub-text field, comprising:
in a case that an input event of an acknowledgment character is monitored, determining, as one sub-text field, a character between a currently latest input character and a character that is input for the first time after the input event is previously monitored.

6. The method according to claim 1, wherein the switching (S2600) the to-be-switched text field to the target text field of the second language type in response to the second input specifically comprises:
switching the to-be-switched text field to the target text field of the second language type, and switching a cursor to an end of a displayed text field in response to the second input.

7. A text language type switching apparatus (300), configured in an electronic device (100) comprising a touchscreen (1071), comprising:
a first receiving module (310), configured to receive, by the touchscreen (1071), a typing input of a user;
a first responding module (320), configured to display, by the touchscreen (1071), a first text field in response to the typing input;
a second receiving module (330), configured to receive, by the touchscreen (1071), a first input of the user;
a second responding module (340), configured to determine a to-be-switched text field of a first language type from the first text field in response to the first input;
a third receiving module (350), configured to receive a second input of the user; and
a third responding module (360), configured to switch the to-be-switched text field to a target text field of a second language type in response to the second input;
wherein
the first text field comprises at least two sub-text fields that are sequentially input by the user, and the second responding module (340) is specifically configured to:
according to a target type of the first input, determine a target sequence number corresponding to the target type and determine a sub-text field corresponding to the target sequence number that is in the at least two sub-text fields as the to-be-switched text field; wherein
the target type of the first input is any one of following: a quantity of input times of the first input, a sliding distance, a sliding direction or a sliding speed corresponding to the first input.

8. The apparatus (300) according to claim 7, wherein the typing input comprises a first typing sub-input, the first typing input comprises multiple typing sub-inputs, the first typing sub-input is one of the multiple typing sub-inputs;
the first responding module (320) is specifically configured to: according to the first typing sub-input, determine an original text field and determine the to-be-switched text field of the first language type corresponding to the original text field; and
the third responding module (360) is specifically configured to determine, according to the original text field corresponding to the to-be-switched text field, the target text field of the second language type corresponding to the original text field.

9. The apparatus (300) according to claim 8, wherein
in a case that the first language type is English, the to-be-switched text field is the original text field; or
in a case that the second language type is English, the target text field is the original text field.

10. The apparatus (300) according to claim 8, wherein in a case that the original text field matches a text field of at least one second language type, the third responding module (360) comprises a display unit, a receiving unit, and a responding unit; wherein
the display unit is configured to display the text field of at least one second language type that matches the original text field corresponding to the to-be-switched text field;
the receiving unit is configured to receive third input of the user; and
the responding unit is configured to determine the target text field of the second language type from the text field of at least one second language type in response to the third input.

11. The apparatus (300) according to claim 7, wherein the apparatus (300) further includes a determining module, configured to:
in a case that an input event of an acknowledgment character is monitored, determine, as one sub-text field, a character between a currently latest input character and a character that is input for the first time after the input event is previously monitored.

12. The apparatus (300) according to claim 7, wherein the third responding module (360) is specifically configured to:
switch the to-be-switched text field to the target text field of the second language type, and switch a cursor to an end of a displayed text field in response to the second input.

13. A readable storage medium, wherein the readable storage medium stores a program or an instruction, and in a case that the program or the instruction is executed by a processor (110), steps in the text language type switching method according to any one of claims 1 to 6 are implemented.

## Patentansprüche

1. Verfahren zur Umschaltung von Textsprachentypen zur Steuerung einer elektronischen Vorrichtung (100), die einen Kontaktbildschirm (1071) umfasst, wobei das Verfahren umfasst:
Empfangen (S2100), durch den Kontaktbildschirm (1071), einer Tastatureingabe eines Benutzer;
Anzeigen (S2200), durch den Kontaktbildschirm (1071), eines ersten Textfeldes als Reaktion auf die Tastatureingabe,
Empfangen (S2300), durch den Kontaktbildschirm (1071), einer ersten Eingabe des Benutzers;
Bestimmen (S2400) eines umzuschaltenden Textfeldes eines ersten Sprachentyps aus dem ersten Textfeld als Reaktion auf die erste Eingabe;
Empfangen (S2500) einer zweiten Eingabe des Benutzers; und,
Umschalten (S2600) des umzuschaltenden Textfeldes in ein Zieltextfeld eines zweiten Sprachentyps als Reaktion auf die zweite Eingabe.
wobei das erste Textfeld mindestens zwei Untertextfelder umfasst, die von dem Benutzer nacheinander eingegeben werden, und das Bestimmen (S2400) des umzuschaltenden Textfeldes des ersten Sprachentyps aus dem ersten Textfeld als Reaktion auf die erste Eingabe spezifisch umfasst:
nach einem Zieltyp der ersten Eingabe, Bestimmen einer Zielsequenznummer, die dem Zieltyp entspricht, und Bestimmen eines Untertextfeldes, das der Zielsequenznummer, die sich in den mindestens zwei Untertextfeldern befindet, entspricht, als das umzuschaltende Textfeld;
wobei der Zieltyp der ersten Eingabe einer der folgenden ist: eine Anzahl von Eingabenmalen der ersten Eingabe, ein Schiebeabstand, eine Schieberichtung oder eine Schiebegeschwindigkeit, die der ersten Eingabe entspricht.

2. Verfahren nach Anspruch 1, wobei die Tastatureingabe eine erste Tastaturuntereingabe umfasst, die erste Tastatureingabe mehrere Tastaturuntereingaben umfasst, die erste Tastaturuntereingabe eine der mehreren Tastaturuntereingaben ist, und das Anzeigen (S2200) des ersten Textfeldes als Reaktion auf die Tastatureingabe umfasst:
nach der ersten Tastaturuntereingabe, Bestimmen eines ursprünglichen Textfeldes und Bestimmen des umzuschaltenden Textfeldes des ersten Sprachentyps, das dem ursprünglichen Textfeld entspricht;
und
das Umschalten (S2600) des umzuschaltenden Textfeldes in das Zieltextfeld des zweiten Sprachentyps umfasst:
Bestimmen, nach dem ursprünglichen Textfeld, das dem umzuschaltenden Textfeld entspricht, das Zieltextfeld des zweiten Sprachentyps, das dem ursprünglichen Textfeld entspricht.

3. Verfahren nach Anspruch 2, wobei:
in einem Fall, dass der erste Sprachentyp Englisch ist, das umzuschaltende Textfeld das ursprüngliche Textfeld ist; oder
in einem Fall, dass der zweite Sprachentyp Englisch ist, das Zieltextfeld das ursprüngliche Textfeld ist.

4. Verfahren nach Anspruch 2, wobei in einem Fall, dass das ursprüngliche Textfeld mit einem Textfeld von mindestens einem zweiten Sprachentyp übereinstimmt, das Bestimmen nach dem ursprünglichen Textfeld, das dem umzuschaltenden Textfeld entspricht, des Zieltextfeldes des zweiten Sprachentyps, das dem ursprünglichen Textfeld entspricht, umfasst:
Anzeigen des Textfeldes von mindestens einem zweiten Sprachentyp, das mit dem ursprünglichen Textfeld übereinstimmt, das dem umzuschaltenden Textfeld entspricht;
Empfangen einer dritten Eingabe des Benutzers; und
Bestimmen des Zieltextfeldes des zweiten Sprachentyps aus dem Textfeld von mindestens einem zweiten Sprachentyp als Reaktion auf die dritte Eingabe.

5. Verfahren nach Anspruch 1, wobei das Verfahren ferner einen Schritt zum Bestimmen des Untertextfeldes umfasst, umfassend:
in einem Fall, dass ein Eingabeereignis eines Bestätigungszeichens überwacht wird, Bestimmen, als ein Untertextfeld, ein Zeichen zwischen einem aktuell zuletzt eingegebenen Zeichen und einem Zeichen, das zum ersten Mal nach dem zuvor überwachten Eingabeereignis eingegeben wird.

6. Verfahren nach Anspruch 1, wobei das Umschalten (S2600) des umzuschaltenden Textfeldes in dem Zieltextfeld des zweiten Sprachentyps als Reaktion auf die zweite Eingabe umfasst:
Umschalten des umzuschaltenden Textfeldes in dem Zieltextfeld des zweiten Sprachentyps, und Verschieben einer Schreibmarke am Ende eines angezeigten Textfeldes als Reaktion auf die zweite Eingabe.

7. Apparat (300) zur Umschaltung von Textsprachentypen, der in einer elektronischen Vorrichtung (100) konfiguriert ist, die einen Kontaktbildschirm (1071) umfasst, umfassend:
ein erstes Empfangsmodul (310), das dazu konfiguriert ist, eine Tastatureingabe eines Benutzers über den Kontaktbildschirm (1071) zu empfangen;
ein erstes Antwortmodul (320), das dazu konfiguriert ist, ein erstes Textfeld über den Kontaktbildschirm (1071) als Reaktion auf die Tastatureingabe anzuzeigen;
ein zweites Empfangsmodul (330), das dazu konfiguriert ist, eine erste Eingabe des Benutzers über den Kontaktbildschirm (1071) zu empfangen;
ein zweites Antwortmodul (340), das dazu konfiguriert ist, ein umzuschaltendes Textfeldes eines ersten Sprachentyps aus dem ersten Textfeld als Reaktion auf die erste Eingabe zu bestimmen;
ein drittes Empfangsmodul (350), das dazu konfiguriert ist, eine zweite Eingabe des Benutzers zu empfangen; und
ein drittes Antwortmodul (360), das dazu konfiguriert ist, das umzuschaltende Textfeld in ein Zieltextfeld eines zweiten Sprachentyps als Reaktion auf die zweite Eingabe umzuschalten;
wobei das erste Textfeld mindestens zwei Untertextfelder umfasst, die von dem Benutzer nacheinander eingegeben werden, und das zweite Antwortmodul (340) spezifisch dazu konfiguriert ist, um:
nach einem Zieltyp der ersten Eingabe, eine Zielsequenznummer zu bestimmen, die dem Zieltyp entspricht, und ein Untertextfeld zu bestimmen, das der Zielsequenznummer entspricht, das sich zwischen den mindestens zwei Untertextfeldern befindet, als das umzuschaltende Textfeld; wobei
der Zieltyp der ersten Eingabe einer der folgenden ist: eine Anzahl von Eingabenmalen der ersten Eingabe, ein Schiebeabstand, eine Schieberichtung oder eine Schiebegeschwindigkeit, die der ersten Eingabe entspricht.

8. Apparat (300) nach Anspruch 7, wobei die Tastatureingabe eine erste Tastaturuntereingabe umfasst, die erste Tastatureingabe mehrere Tastaturuntereingaben umfasst, die erste Tastaturuntereingabe eine der mehreren Tastaturuntereingaben ist;
das erste Antwortmodul (320) spezifisch dazu konfiguriert ist, nach der ersten Tastaturuntereingabe, ein ursprünglichen Textfeld zu bestimmen und das umzuschaltende Textfeld des ersten Sprachentyps zu bestimmen, das dem ursprünglichen Textfeld entspricht; und
das dritte Antwortmodul (360) spezifisch dazu konfiguriert ist, nach dem ursprünglichen Textfeld, das dem umzuschaltenden Textfeld entspricht, das Zieltextfeld des zweiten Sprachentyps zu bestimmen, das dem ursprünglichen Textfeld entspricht

9. Apparat (300) nach Anspruch 8, wobei
in einem Fall, dass das erste Sprachentyp Englisch ist, das umzuschaltende Textfeld das ursprüngliche Textfeld ist ; oder
in einem Fall, dass das zweite Sprachentyp Englisch ist, das Zieltextfeld das ursprüngliche Textfeld ist.

10. Apparat (300) nach Anspruch 8, wobei in einem Fall, dass das ursprüngliche Textfeld mit einem Textfeld von mindestens einem zweiten Sprachentyp übereinstimmt, das dritte Antwortmodul (360) eine Anzeigeeinheit, eine Empfangseinheit und eine Antworteinheit umfasst; wobei
die Anzeigeeinheit dazu konfiguriert ist, das Textfeld von mindestens einem zweiten Sprachentyp anzuzeigen, das mit dem ursprünglichen Textfeld übereinstimmt, das dem umzuschaltenden Textfeld entspricht;
die Empfangseinheit dazu konfiguriert ist, eine dritte Eingabe des Benutzers zu empfangen; und
die Antworteinheit dazu konfiguriert ist, das Zieltextfeld des zweiten Sprachentyps aus dem Textfeld von mindestens einem zweiten Sprachentyp als Reaktion auf die dritte Eingabe zu bestimmen.

11. Apparat (300) nach Anspruch 7, wobei der Apparat (300) ferner ein Bestimmungsmodul umfasst, das dazu konfiguriert ist, um:
in einem Fall, dass ein Eingabeereignis eines Bestätigungszeichens überwacht wird, ein Zeichen zwischen einem aktuell zuletzt eingegebenen Zeichen und einem Zeichen, das zum ersten Mal nach dem zuvor überwachten Eingabeereignis eingegeben wird, als ein Untertextfeld zu bestimmen.

12. Apparat (300) nach Anspruch 7, wobei das dritte Antwortmodul (360) spezifisch dazu konfiguriert ist, um:
das umzuschaltende Textfeld in das Zieltextfeld des zweiten Sprachentyps umzuschalten und eine Schreibemarke am Ende eines angezeigten Textfeldes als Reaktion auf die zweite Eingabe zu verschieben.

13. Lesbares Speichermedium, wobei das lesbare Speichermedium ein Programm oder eine Anweisung speichert, und wobei, in einem Fall, dass das Programm oder die Anweisung von einem Prozessor (110) ausgeführt wird, Schritte des Verfahrens zur Umschaltung von Textsprachentypen nach einem der Ansprüche 1 bis 6 implementiert werden.

## Revendications

1. Procédé de commutation de type de langage de texte destiné à commander un dispositif électronique (100) comprenant un écran tactile (1071), ledit procédé comprenant :
la réception (S2100), par l'écran tactile (1071), d'une saisie au clavier d'un utilisateur; l'affichage (S2200), par l'écran tactile (1071), d'un premier champ de texte en réponse à la saisie au clavier ;
la réception (S2300), par l'écran tactile (1071), d'une première entrée de l'utilisateur;
la détermination (S2400) d'un champ de texte devant être commuté d'un premier type de langage à partir du premier champ de texte en réponse à la première entrée ;
la réception (S2500) d'une seconde entrée de l'utilisateur ; et
la commutation (S2600) du champ de texte devant être commuté en un champ de texte cible d'un second type de langage en réponse à la seconde entrée;
dans lequel
le premier champ de texte comprend au moins deux champs de sous-texte qui sont saisis séquentiellement par l'utilisateur, et la détermination (S2400) du champ de texte devant être commuté du premier type de langage à partir du premier champ de texte en réponse à la première entrée comprend spécifiquement :
en fonction d'un type cible de la première entrée, la détermination d'un numéro de séquence cible correspondant au type cible et la détermination d'un sous-champ de texte correspondant au numéro de séquence cible parmi lesdits au moins deux champs de sous-texte en tant que champ de texte devant être commuté ;
dans lequel le type cible de la première entrée est l'un quelconque des éléments suivants : une quantité de fois de saisie de la première entrée, une distance de glissement, une direction de glissement ou une vitesse de glissement correspondant à la première entrée.

2. Le procédé selon la revendication 1, dans lequel la saisie au clavier comprend une première sous-saisie au clavier, la première saisie au clavier comprend de multiples sous-saisies au clavier, la première sous-saisie au clavier est l'une des multiples sous-saisies au clavier, et l'affichage (S2200) du premier champ de texte en réponse à la saisie au clavier comprend :
en fonction de la première sous-saisie au clavier, la détermination d'un champ de texte original et la détermination du champ de texte devant être commuté du premier type de langage correspondant au champ de texte original ; et
la commutation (S2600) du champ de texte devant être commuté en le champ de texte cible du second type de langage comprend :
la détermination, en fonction du champ de texte original correspondant au champ de texte devant être commuté, du champ de texte cible du second type de langage correspondant au champ de texte original.

3. Le procédé selon la revendication 2, dans lequel :
dans le cas où le premier type de langage est l'anglais, le champ de texte devant être commuté est le champ de texte original ; ou
dans le cas où le second type de langage est l'anglais, le champ de texte cible est le champ de texte original.

4. Le procédé selon la revendication 2, dans lequel, dans le cas où le champ de texte original correspond à un champ de texte d'au moins un second type de langage, la détermination, en fonction du champ de texte original correspondant au champ de texte devant être commuté, du champ de texte cible du second type de langage correspondant au champ de texte original comprend :
l'affichage du champ de texte d'au moins un second type de langage correspondant au champ de texte original correspondant au champ de texte devant être commuté ;
la réception d'une troisième entrée de l'utilisateur ; et
la détermination du champ de texte cible du second type de langage à partir du champ de texte d'au moins un second type de langage en réponse à la troisième entrée.

5. Le procédé selon la revendication 1, dans lequel le procédé comprend en outre une étape de détermination du sous-champ de texte, comprenant :
dans le cas où un événement de saisie d'un caractère de confirmation est surveillé, la détermination, en tant qu'un sous-champ de texte, d'un caractère situé entre un caractère saisi en dernier actuellement et un caractère qui est saisi pour la première fois après que l'événement de saisie ait été précédemment surveillé.

6. Le procédé selon la revendication 1, dans lequel la commutation (S2600) du champ de texte devant être commuté en le champ de texte cible du second type de langage en réponse à la seconde entrée comprend spécifiquement :
la commutation du champ de texte devant être commuté en le champ de texte cible du second type de langage, et la commutation d'un curseur vers une extrémité d'un champ de texte affiché en réponse à la seconde entrée.

7. Un appareil de commutation de type de langage de texte (300), configuré dans un dispositif électronique (100) comprenant un écran tactile (1071), comprenant :
un premier module de réception (310), configuré pour recevoir, par l'écran tactile (1071), une saisie au clavier d'un utilisateur ;
un premier module de réponse (320), configuré pour afficher, par l'écran tactile (1071), un premier champ de texte en réponse à la saisie au clavier ;
un second module de réception (330), configuré pour recevoir, par l'écran tactile (1071), une première entrée de l'utilisateur ;
un second module de réponse (340), configuré pour déterminer un champ de texte devant être commuté d'un premier type de langage à partir du premier champ de texte en réponse à la première entrée ;
un troisième module de réception (350), configuré pour recevoir une seconde entrée de l'utilisateur ; et
un troisième module de réponse (360), configuré pour commuter le champ de texte devant être commuté en un champ de texte cible d'un second type de langage en réponse à la seconde entrée ;
dans lequel le premier champ de texte comprend au moins deux champs de sous-texte qui sont saisis séquentiellement par l'utilisateur, et le second module de réponse (340) est spécifiquement configuré pour :
selon un type cible de la première entrée, déterminer un numéro de séquence cible correspondant au type cible et déterminer un sous-champ de texte correspondant au numéro de séquence cible parmi lesdits au moins deux champs de sous-texte en tant que champ de texte devant être commuté ;
dans lequel
le type cible de la première entrée est l'un quelconque des éléments suivants : une quantité de fois de saisie de la première entrée, une distance de glissement, une direction de glissement ou une vitesse de glissement correspondant à la première entrée.

8. L'appareil (300) selon la revendication 7, dans lequel la saisie au clavier comprend une première sous-saisie au clavier, la première saisie au clavier comprend de multiples sous-saisies au clavier, la première sous-saisie au clavier est l'une des multiples sous-saisies au clavier ;
le premier module de réponse (320) est spécifiquement configuré pour : selon la première sous-saisie au clavier, déterminer un champ de texte original et déterminer le champ de texte devant être commuté du premier type de langage correspondant au champ de texte original ; et
le troisième module de réponse (360) est spécifiquement configuré pour déterminer, selon le champ de texte original correspondant au champ de texte devant être commuté, le champ de texte cible du second type de langage correspondant au champ de texte original.

9. L'appareil (300) selon la revendication 8, dans lequel :
dans le cas où le premier type de langage est l'anglais, le champ de texte devant être commuté est le champ de texte original ;
ou dans le cas où le second type de langage est l'anglais, le champ de texte cible est le champ de texte original.

10. L'appareil (300) selon la revendication 8, dans lequel, dans le cas où le champ de texte original correspond à un champ de texte d'au moins un second type de langage, le troisième module de réponse (360) comprend une unité d'affichage, une unité de réception et une unité de réponse ; dans lequel
l'unité d'affichage est configurée pour afficher le champ de texte d'au moins un second type de langage correspondant au champ de texte original correspondant au champ de texte devant être commuté ;
l'unité de réception est configurée pour recevoir une troisième entrée de l'utilisateur ; et
l'unité de réponse est configurée pour déterminer le champ de texte cible du second type de langage à partir du champ de texte d'au moins un second type de langage en réponse à la troisième entrée.

11. L'appareil (300) selon la revendication 7, dans lequel l'appareil (300) comprend en outre un module de détermination, configuré pour :
dans le cas où un événement de saisie d'un caractère de confirmation est surveillé, déterminer, en tant qu'un sous-champ de texte, un caractère situé entre un caractère saisi en dernier actuellement et un caractère qui est saisi pour la première fois après que l'événement de saisie ait été précédemment surveillé.

12. L'appareil (300) selon la revendication 7, dans lequel le troisième module de réponse (360) est spécifiquement configuré pour :
commuter le champ de texte devant être commuté en le champ de texte cible du second type de langage, et commuter un curseur vers une extrémité d'un champ de texte affiché en réponse à la seconde entrée.

13. Un support de stockage lisible, dans lequel le support de stockage lisible stocke un programme ou une instruction, et dans le cas où le programme ou l'instruction est exécuté par un processeur (110), des étapes du procédé de commutation de type de langage de texte selon l'une quelconque des revendications 1 à 6 sont mises en œuvre.
